# FASCICULE DE BREVET EUROPEEN

(11) **EP 3 058 254 B1**
(45) Date de publication et mention de la délivrance du brevet: **10.05.2017**
(21) Numéro de dépôt: 14780534.5
(22) Date de dépôt: 05.09.2014
(51) Int. Cl.: F16K 3/08

(54) **RÉGULATEUR DE DÉBIT GAZEUX, DÉTENDEUR, ROBINET ET BOUTEILLE MUNIS D'UN TEL RÉGULATEUR**
GASDURCHFLUSSREGLER, DRUCKMINDERER, HAHN UND GASFLASCHE AUSGESTATTET MIT EINEM SOLCHEN REGLER
GAS FLOW CONTROLLER, PRESSURE EXPANDER, TAP AND COMPRESSED GAS BOTTLE PROVIDED WITH SUCH A CONTROLLER

(30) Priorité: 18.10.2013 FR 1360166
(43) Date de publication de la demande: 24.08.2016
(73) Titulaire: L'Air Liquide Société Anonyme pour l'Etude et l'Exploitation des Procédés Georges Claude, 75007 Paris (FR)
(72) Inventeur: GERMANI, Damien, 75015 Paris (FR); RUDNIANYN, Philippe, 91700 Villiers sur Orge (FR); GRAVIERE, Vincent, 94200 Ivry sur Seine (FR); TREVISAN, Adrien, 92200 Neuilly sur Seine (FR)
(74) Mandataire: De Cuenca, Emmanuel Jaime
(86) Numéro de dépôt international: PCT/FR2014/052200
(87) Numéro de publication internationale: WO 2015/055906

(56) Documents cités:
- EP-A1- 0 916 596
- WO-A1-2010/097593
- FR-A1- 2 970 538
- GB-A- 941 816
- US-A- 5 971 230

## Description

La présente invention concerne un régulateur de débit gazeux ainsi qu'un détendeur, un robinet et une bouteille munis d'un tel régulateur de débit.

L'invention concerne plus particulièrement un régulateur de débit gazeux muni d'un corps abritant un conduit de gaz comprenant une extrémité amont destinée à être raccordée à une source de gaz et une extrémité aval munie d'un raccord de sortie et destinée à être raccordée à un utilisateur du gaz avec un débit régulé, le conduit de gaz comprenant un organe de régulation sélective du débit du fluide circulant entre les extrémités amont et aval, le régulateur de débit comprenant un organe de commande manuel monté mobile relativement au corps et coopérant avec l'organe de régulation du débit du fluide pour contrôler le débit de fluide admis à passer de l'extrémité amont vers l'extrémité aval selon la position de l'organe de commande par rapport au corps.

Le document FR2970538A1 décrit un tel dispositif.

L'invention s'applique en particulier à un robinet de gaz intégrant un régulateur de débit du gaz soutiré.

Les robinets de bouteilles de gaz sous pression, notamment avec détendeur de pression intégré, incluent généralement un régulateur de débit du gaz soutiré permettant l'utilisateur de régler manuellement la quantité de gaz souhaitée.

Les robinets correspondants présentent alors une interface d'utilisation relativement complexe car comprenant :
- plusieurs raccords (un raccord de remplissage, un raccord de sortie en pression, un raccord de sortie en débit),
- plusieurs organes de commande (ouverture/fermeture de la vanne d'isolation du circuit de soutirage et une commande de réglage du débit).

Tous ces éléments sont situés dans un volume restreint, notamment dans le cas d'un robinet de bouteille de gaz transportable manuellement et munie d'un chapeau de protection du robinet. Ceci augmente la difficulté de compréhension du fonctionnement pour un utilisateur et donc les risques d'erreur.

Un but de la présente invention est de pallier tout ou partie des inconvénients de l'art antérieur relevés ci-dessus.

A cette fin, le régulateur de débit selon l'invention, par ailleurs conforme à la définition générique qu'en donne le préambule ci-dessus, est essentiellement caractérisé en ce que l'organe de commande comporte une paroi périphérique délimitant un volume creux central et en ce que le raccord de sortie est situé dans ledit creux central.

Selon des particularités possibles :
- la paroi périphérique extérieure de l'organe de commande délimite un volume creux ouvert vers l'extérieur du régulateur,
- le raccord de sortie débouche et/ou fait saillie vers l'extérieur du régulateur,
- le raccord de sortie débouche dans le volume creux,
- l'organe de commande entoure avec un espacement le raccord de sortie,
- le raccord de sortie est un raccord mâle oblong,
- le volume creux est délimité par une paroi intérieure de l'organe de commande, cette paroi intérieure est espacée du raccord de sortie et forme une enceinte de protection autour du raccord de sortie,
- l'enceinte de protection forme une cuvette concave dans laquelle est situé le raccord,
- la paroi intérieure délimitant l'enceinte de protection autour du raccord est parallèle à l'axe longitudinal du raccord de sortie,
- la paroi intérieure délimitant l'enceinte de protection autour du raccord est inclinée par rapport à l'axe longitudinal du raccord de sortie et diverge transversalement vers l'extérieur du régulateur, c'est-à-dire que la distance entre paroi intérieure et le raccord de sortie est plus grande au niveau l'extrémité terminale du raccord qu'au niveau du fond du volume creux,
- l'organe de commande comporte une paroi périphérique extérieure de préhension disposée concentriquement autour de sa paroi intérieure,
- le volume creux est ouvert vers l'extérieur du régulateur, c'est-à-dire que l'accès au raccord de sortie n'est pas entravé depuis l'extérieur du régulateur pour permettre la connexion fluidique d'un appareil de soutirage avec le raccord de sortie, l'organe de préhension formant autour du raccord de sortie un fourreau ouvert à son extrémité longitudinal et espacé transversalement par rapport au raccord de sortie,
- à une pluralité de positions distinctes de l'organe de commande correspondent respectivement une pluralités de débits distincts établis par l'organe de régulation de débit.

Cet agencement, outre qu'il permet de réduire l'encombrement du robinet, confère une ergonomie qui rend immédiatement compréhensible à l'utilisateur les fonctions associées. En effet, même un utilisateur non averti comprend le lien fonctionnel entre le bouton de réglage du débit et le raccord par lequel est délivré le gaz au débit correspondant.

Le regroupement de ces deux fonctions dans un même volume permet une meilleure utilisation successive de ces fonctions (branchement d'un flexible sur le raccord de sortie puis sélection d'un débit via l'organe de commande).

Cet agencement permet de disposer les autres fonctions et organes du robinet avec plus de souplesse et de possibilités.

De plus, cette architecture permet de protéger le raccord de sortie au sein d'une pièce fonctionnelle de commande. Ceci permet également le cas échéant de protéger l'extrémité d'un flexible raccordé au raccord de sortie à l'intérieur du volume creux. En effet, dans une telle configuration, l'extrémité du flexible reliée au raccord de sortie est protégée mécaniquement par la paroi de l'organe de commande.

Par ailleurs, des modes de réalisation de l'invention peuvent comporter l'une ou plusieurs des caractéristiques suivantes :
- l'organe de commande comprend une portion de forme générale tubulaire, tronconique ou en couronne, le raccord de sortie étant situé dans la partie centrale de ladite forme tubulaire, tronconique ou en couronne,
- la portion de forme générale tubulaire, tronconique ou en en forme de couronne débouche et est ouverte vers l'extérieur du régulateur pour permettre l'accès direct au raccord de sortie,
- l'organe de commande et le raccord de sortie sont disposés concentriquement, par exemple de façon coaxiale
- l'organe de commande est mobile en rotation sur le corps autour d'un axe de rotation,
- l'organe de commande est mobile en rotation sur le corps autour d'un axe de rotation et de symétrie passant par son volume creux central et en ce que le raccord de sortie est fixe relativement au corps et est situé sur ledit axe de rotation de l'organe de commande,
- l'organe de régulation du débit comprend une plaque munie de trous calibrés de diamètres respectifs distincts correspondants à des débits de gaz distincts déterminés, l'organe de commande sélectionnant un des trous calibrés déterminé sur le trajet du gaz dans le conduit de gaz selon la position de l'organe de commande par rapport au corps,
- l'organe de régulation du débit est monté mobile relativement au corps et solidaire du déplacement de l'organe de commande, le corps comprenant un passage dont une première extrémité communique avec l'extrémité aval du conduit de gaz et dont l'autre extrémité communique avec les trous calibrés sur une première face de l'organe de régulation, les trous calibrés étant interposés tour à tour entre les extrémités amont et aval du conduit de gaz selon les positions de l'organe de commande relativement au corps de régulation,
- l'organe de commande est monté mobile en rotation relativement au corps, l'organe de régulation du débit étant solidaire en rotation de l'organe de commande, des positions angulaires déterminées de l'organe de commande et de l'organe de régulation relativement au corps disposant respectivement les trous calibrés entre les extrémités amont et aval du conduit de gaz,
- l'organe de régulation du débit est fixe relativement au corps, l'organe de commande étant mobile relativement à l'organe de régulation de débit et comprenant un passage dont une première extrémité communique avec l'extrémité aval du conduit de gaz et dont l'autre extrémité est susceptible de communiquer de façon étanche et successivement avec chacun des trous calibrés sur une première face de l'organe de régulation selon les positions de l'organe de commande relativement à l'organe de régulation,
- le raccord de sortie a une forme oblongue et, selon une direction parallèle à l'axe longitudinal du raccord de sortie, l'extrémité terminale du raccord de sortie est située au niveau ou en retrait de l'extrémité terminale de l'organe de commande,
- le régulateur de débit comprend, au niveau de l'extrémité amont du conduit de gaz, un raccord mâle ou femelle destiné à coopérer en accrochage sélectif avec un raccord de gaz conjugué femelle ou mâle d'une source de gaz telle qu'une prise de gaz murale ou un robinet de gaz avec ou sans détendeur de pression, pour monter sélectivement le régulateur de gaz sur ledit raccord de gaz de la source et relier l'extrémité amont du conduit de gaz avec le gaz délivré par la source de gaz,
- le circuit de gaz du détendeur comprend une vanne d'isolement,
- l'organe de commande comporte une première portion de montage montée sur le corps du raccord de sortie, la première portion de montage étant raccordée à une seconde portion de préhension ayant des dimensions supérieures à la première portion de montage et délimitant le volume creux autour du raccord de sortie,
- le diamètre externe du raccord de sortie est compris entre 3 et 30 mm et le diamètre interne du volume creux central de l'organe de commande est compris entre 20 et 150mm de sorte que la paroi périphérique de l'organe de commande est espacée du raccord de sortie d'une distance comprise entre 5 et 40mm,
- au moins une partie de la paroi périphérique de l'organe de commande délimitant un volume creux fait saillie relativement au corps du robinet pour permettre sa préhension manuelle,
- le régulateur de débit comporte un support intermédiaire auquel est fixé le raccord de sortie, ledit support intermédiaire comprenant un passage interne communiquant avec une gorge collectrice en communication avec les trous calibrés au niveau d'une seconde face de l'organe de régulation,
- le raccord de sortie est monobloc ou solidaire avec le corps du régulateur de débit.

L'invention concerne également un détendeur de pression destiné à être raccordé à une source de gaz sous pression, le détendeur comprenant un corps abritant un circuit de gaz ayant une extrémité amont munie d'un raccord d'entrée destiné à être relié sélectivement à une source de pression tel qu'un raccord de sortie d'un robinet de gaz, et une extrémité aval munie d'un raccord de sortie destinée à être raccordée à un utilisateur du gaz détendu, le circuit de gaz comprenant un détendeur de pression conformé pour détendre le gaz circulant dans le circuit de gaz à une pression déterminée fixe ou réglable, le détendeur comprenant un régulateur de débit selon l'une quelconque des caractéristiques ci-dessus ou ci-dessous, dans lequel le raccord de sortie du régulateur de débit constitue un raccord de sortie du détendeur.

L'invention concerne également un robinet pour bouteille de fluide sous pression, notamment de gaz sous pression, comportant un corps de robinet comprenant une extrémité de montage destinée à être raccordée à un orifice d'une bouteille de gaz, un circuit interne de soutirage du fluide comprenant une première extrémité débouchant au niveau de l'extrémité de montage et une seconde extrémité débouchant au niveau d'un raccord de sortie situé sur le corps de robinet, le robinet comprenant un régulateur de débit selon l'une quelconque des caractéristiques ci-dessus ou ci-dessous, dans lequel le raccord de sortie du régulateur de débit constitue un raccord de sortie du robinet.

Selon d'autres particularités possibles :
- l'organe de régulation du débit comprend une plaque munie de trous calibrés de diamètres respectifs distincts correspondants à des débits de gaz distincts déterminés, l'organe de commande sélectionnant un trou calibré déterminé sur le trajet du gaz dans le circuit de soutirage de gaz selon la position de l'organe de commande par rapport au corps du robinet,
- l'organe de commande et l'organe de régulation du débit sont mobiles solidairement relativement au corps du robinet, le corps du régulateur de débit comprend un passage dont une première extrémité communique avec le circuit de soutirage dans le raccord de sortie et dont l'autre extrémité communique avec les trous calibrés sur une première face de l'organe de régulation, les trous calibrés étant interposés tour à tour sur le circuit de soutirage selon respectivement les positions de l'organe de commande relativement au corps du robinet.

L'invention peut concerner également une bouteille de fluide sous pression comprenant un robinet conforme à l'une quelconque des caractéristiques ci-dessus ou ci-dessous.

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles :
- la figure 1 représente une vue en coupe longitudinale, schématique et partielle, illustrant un premier exemple de réalisation possible d'un régulateur de débit selon l'invention,
- la figure 2 représente une vue en perspective, schématique et partielle, illustrant un robinet intégrant un régulateur de débit conforme à la figure 1,
- la figure 3 représente une vue de côté, schématique et partielle, du robinet de la figure 2 monté sur une bouteille de gaz,
- la figure 4 représente une vue en coupe, schématique et partielle, illustrant l'utilisation possible d'un régulateur de débit selon l'invention pour réguler un débit de gaz au niveau d'une prise murale de gaz,
- la figure 5 représente une vue en coupe, schématique et partielle, illustrant un détendeur de gaz susceptible d'utiliser un régulateur de débit conforme à l'invention,
- la figure 6 représente une vue en coupe, schématique et partielle d'un détail d'un robinet intégrant un régulateur de débit conforme à un autre exemple de réalisation.

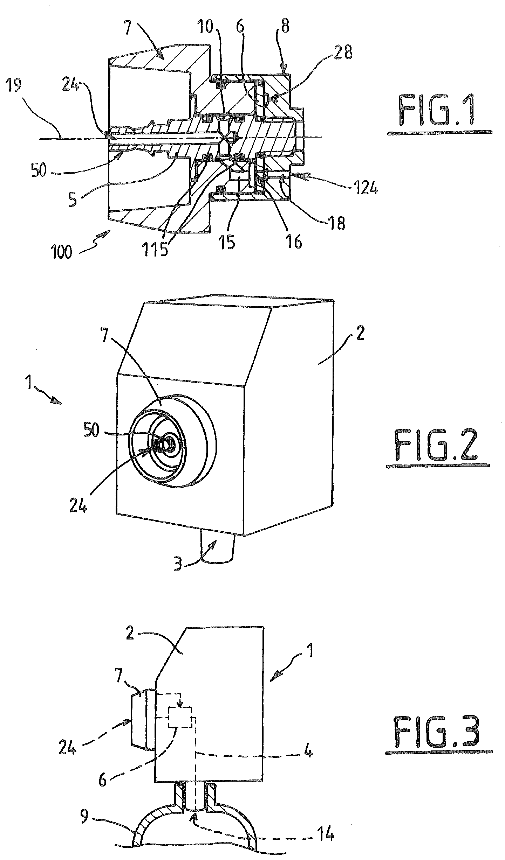

Le robinet 1 de la figure 2 comporte un corps 2 dont le contour est schématisé et simplifié. Ce corps 2 comprend une extrémité 3 de montage qui peut être inférieure (et peut être filetée) destinée à être raccordée (par exemple par vissage) dans un orifice d'une bouteille 9 de fluide tel que du gaz sous pression (cf. figure 3).

Le corps 2 contient un circuit 4 interne de gaz pour de soutirage du fluide. Ce circuit 4 interne comprend une première extrémité 14 amont débouchant au niveau de l'extrémité 3 de montage et une seconde extrémité 24 débouchant au niveau d'un raccord 50 de sortie situé sur le corps 2 (le circuit 4 de soutirage est schématisé en pointillés à la figure 3).

Le circuit 4 de soutirage comprend un organe 6 de régulation sélective du débit du fluide circulant dans le circuit 4 de soutirage. Le robinet 1 comprend un organe 7 de commande manuel monté mobile relativement au corps 2 et actionnant sélectivement l'organe 6 de régulation de débit pour réguler le débit de fluide soutiré. Par exemple, l'organe 7 de commande est couplé mécaniquement avec l'organe 6 de régulation sélective de sorte qu'un déplacement du premier (organe 7 de commande) modifie par réaction la configuration et donc la consigne de débit établie par le second (organe de régulation).

Comme visible aux figures 1 à 3, l'organe 7 de commande comporte une paroi périphérique délimitant un volume creux central et le raccord 50 de sortie est situé dans le volume de ce creux central.

Par exemple, et comme représenté, l'organe 7 de commande possède une extrémité de préhension faisant saillie au moins en partie sur le corps 2 et définissant une cavité. Par exemple l'organe 7 de commande possède une extrémité de préhension tubulaire ou conique ou de toute autre forme appropriée.

Le raccord 50 de sortie est situé dans la partie interne de ladite cavité.

L'organe 7 de commande et le raccord 50 de sortie sont disposés de préférence concentriquement. De façon plus préférentielle encore l'organe 7 de commande et le raccord 10 de sortie sont coaxiaux.

L'organe 7 de commande est par exemple monté mobile en rotation sur le corps 2 autour de son axe de symétrie longitudinal et le raccord 50 de sortie comporte une extrémité mâle située sur cet axe de symétrie et de rotation (cf. figure 1). De préférence le raccord 50 de sortie est monté fixe sur le corps 2 du robinet 1.

Ainsi, la rotation de l'organe 7 de commande sur lui-même configure l'organe 6 de régulation de débit pour augmenter ou diminuer le débit admis à sortir par le raccord 50 de sortie. A cet effet, l'organe 7 de commande peut porter une graduation coopérant avec le corps 2 ou un autre repère pour indiquer à l'utilisateur le débit choisi.

Comme visible aux figures 1 et 3, de préférence l'extrémité terminale du raccord 50 de sortie est située au en retrait de l'extrémité terminale de l'organe 7 de commande (pour protéger le raccord 50 des chocs).

Bien entendu, cette extrémité terminale du raccord 50 de sortie peut être située au niveau (dans le même plan transversal à l'axe du raccord 50) ou en saillie par rapport à l'extrémité terminale de l'organe 7 de commande.

De plus, et notamment en fonction des normes dimensionnelles imposées par les réglementations selon les pays, le diamètre externe du raccord 50 de sortie peut être compris entre trois et trente millimètres et le diamètre interne de la cavité de l'organe 7 de commande peut être compris entre vingt millimètres (lorsque le diamètre externe du raccord est inférieur à cette valeur) et cent cinquante millimètres.

La paroi périphérique de l'organe 7 de commande peut être espacée du raccord 50 de sortie d'une distance comprise entre cinq et quarante millimètres De préférence, cet espacement est suffisant pour permettre l'accès aux doigts d'un utilisateur en vue de raccorder/séparer un flexible relativement au raccord 50. Ceci permet de raccorder une extrémité femelle d'un flexible d'un appareil utilisateur du gaz sur le raccord 50 de sortie, à l'intérieur du volume de l'organe 7 de commande.

Comme illustré à la figure 1, l'organe 7 de commande peut comporter une première portion de montage (à droite sur la figure 1) montée de façon étanche sur le corps du raccord 50 de sortie. Cette première portion de montage est raccordée à une seconde portion (à gauche sur la figure 1) ayant un diamètre supérieur à la première portion tubulaire et délimitant le volume creux autour du raccord 50 de sortie. Par exemple, le raccord 50 est fixé (par exemple par vissage) sur un support 8 intermédiaire destiné à être fixé sur le corps 2 du robinet 1. Bien entendu, et comme décrit plus tard, le raccord 50 peut être fixé directement sur un corps 2 de robinet ou autre.

L'organe 6 de régulation du débit peut comprend une plaque (ou disque) munie de trous calibrés 16 de diamètres respectifs distincts correspondants à des débits de soutirages distincts déterminés. Selon sa position relativement au corps 2, l'organe 7 de commande sélectionne un trou calibré 16 déterminé sur le trajet du fluide.

Cet organe 6 de régulation est par exemple monté fixe relativement au corps 2 du robinet tandis que l'organe 7 de commande est mobile relativement à l'organe 6 de régulation.

Comme visible dans l'exemple de la figure 1, l'organe 7 de commande comprend un passage 15 dont une première extrémité communique avec le circuit de soutirage dans le raccord 50 (vers extrémité terminale du raccord 50). Selon la position de l'organe 7 de commande relativement à l'organe 6 de sortie, une seconde extrémité de ce passage 15 est susceptible de communiquer (ou non) de façon étanche avec un trou calibré 16 déterminé sur une première face de l'organe 6 de régulation.

Le support 8 intermédiaire (ou le corps 2 du robinet le cas échéant s'il n'y a pas de support 8 intermédiaire) peut comprendre un passage 18 interne communiquant, via une gorge 28 collectrice, avec tous les orifices 16 au niveau d'une seconde face de l'organe 6 de régulation.

Ainsi, le gaz dont on souhaite régler le débit de sortie arrive par le passage 18 percé dans le support 8 jusque dans la gorge 28 collectrice créée entre l'organe 7 de commande et le support 8. Cette gorge 28 collectrice est en communication avec chacun des trous 16 calibrés réalisés dans le disque 6.

Le passage 15 de l'organe 7 de régulation est positionné de façon étanche sur l'autre face au niveau d'un trou calibré 16 correspondant au débit souhaité via la rotation du bouton 2 qui est manoeuvré par l'utilisateur. L'organe 7 de commande est dans cet exemple mobile en rotation par rapport au support 8. Le disque 6 à trous 16 calibrés est dans cet exemple fixe en rotation par rapport au support 8 et au raccord 50 de sortie.

Le gaz passe par le trou 16 calibré sélectionné et par le passage 15 formé dans l'organe 7 de commande et arrive au niveau d'une gorge 10 étanche ménagée entre le raccord 50 de sortie 1 et l'organe 7 de commande. Un conduit percé dans le raccord 50 de sortie 1 permet la mise en communication de l'orifice de sortie terminal du raccord 50 de sortie avec cette gorge 10 ménagée entre l'organe 7 de commande et le raccord 50 de sortie. Des joints 115 positionnés de part et d'autre de la dite gorge 10 permettent de garantir l'alimentation de l'orifice de sortie avec le débit de gaz voulu.

Cet agencement permet au raccord 50 de sortie d'être fixe en rotation par rapport au corps 2 (ou support 8). Le caractère fixe du raccord 50 de sortie permet de ne pas induire de mouvement de rotation du raccord 50 de sortie (et en conséquence de rotation du flexible qui lui est raccordé) lors de la rotation de l'organe 7 de commande.

En variante, et comme décrit plus en détail dans un exemple ci-après, le disque 6 comprenant les orifices 16 calibrés peut être mobile en rotation avec l'organe 7 de commande ou monobloc avec ce dernier et le raccord 50 de sortie reste fixe.

Comme visible, le raccord 50 de sortie peut comprendre une géométrie (épaulement transversal) permettant l'arrêt axial de l'organe 7 de commande du débit.

Comme expliqué ci-dessus, la fonction de support de la pièce 8 peut être assurée par le corps 2 du robinet 1 lui-même ou par une pièce distincte du corps 2 et fixée ou solidaire de ce dernier.

Bien entendu, le régulateur de débit selon l'invention n'est pas nécessairement intégré à un robinet de gaz et peut être structurellement indépendant et utilisable pour réguler un débit provenant de toute autre source de gaz.

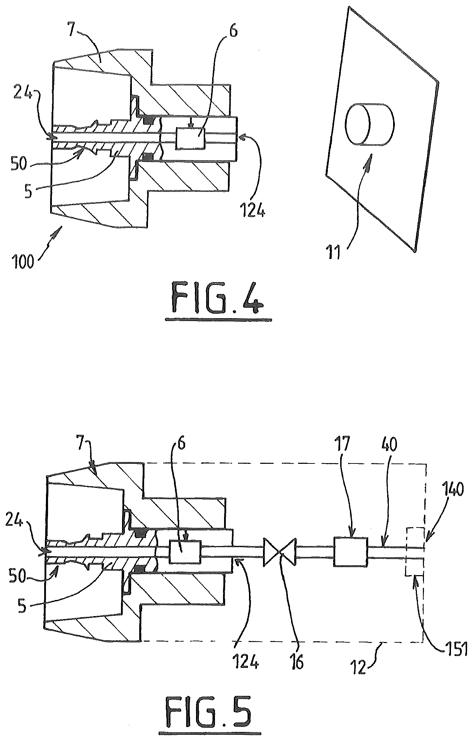

Par exemple, comme représenté à la figure 4, le régulateur de débit peut comporter, au niveau de l'extrémité amont 124 de son conduit interne de gaz , un raccord mâle ou femelle destiné à coopérer en accrochage sélectif avec un raccord de gaz conjugué femelle ou mâle d'une prise 11 de gaz, par exemple une prise de gaz murale.

Par soucis de simplification, les éléments identique à ceux décrits précédemment sont désignés par les mêmes références numériques et ne sont pas décrits une seconde fois.

De même, le régulateur de débit peut être intégré (ou être sélectivement raccordable) à un détendeur de pression indépendant d'un robinet.

Comme illustré à la figure 5, un détendeur de pression peut comprendre un sélecteur de débit tel que décrit précédemment.

Le détendeur de pression est par exemple destiné à être raccordé à une source de gaz sous pression tel qu'un robinet de gaz sous pression.

Le détendeur comprend par exemple un corps 12 abritant un circuit 40 de gaz ayant une extrémité 140 amont munie d'un raccord 15 d'entrée destiné à être relié sélectivement à une source de pression tel qu'un raccord de sortie d'un robinet de gaz.

Le circuit 40 de gaz du détendeur comprend une extrémité aval 24 munie d'un raccord 50 de sortie destinée à être raccordée à un utilisateur du gaz détendu.

Le circuit 40 de gaz comprenant un détendeur 17 de pression conformé pour détendre le gaz circulant dans le circuit 40 de gaz à une pression déterminée fixe ou réglable. Un clapet 16 d'isolation (intégré ou non au détendeur 17) peut éventuellement être prévu également sur le circuit 40 de gaz. Le clapet 16 peut être situé en amont ou en aval du détendeur 17. Le détendeur intègre un régulateur de débit tel que décrit précédemment. Ainsi, le raccord 50 de sortie du régulateur de débit peut constituer le raccord de sortie du détendeur.

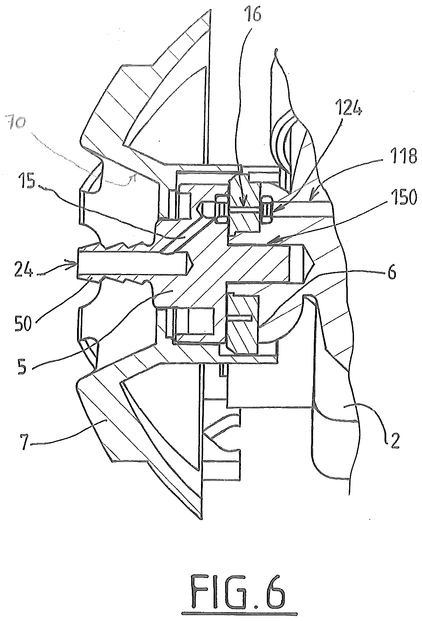

La figure 6 illustre encore une autre variante de réalisation possible du régulateur de débit. Les éléments identiques à ceux décrits ci-dessus sont désignés par les mêmes références numériques. Dans l'exemple de la figure 6 le régulateur de débit est intégré à un corps 2 de robinet (représenté partiellement). Bien entendu, et comme précédemment, ce régulateur de débit être indépendant et/ou intégré à un détendeur de pression.

Dans la réalisation de la figure 6 le raccord 50 de sortie est monté sur le corps 2 du robinet. Par exemple, une extrémité 150 du raccord 50 est rendue solidaire du corps 2 du robinet, notamment par vissage.

L'organe 6 de régulation du débit comprenant les trous calibrés 16 est monté par exemple entre le raccord 50 de sortie et le corps 2 du robinet. Cet organe 6 de régulation du débit a par exemple la forme générale d'un disque.

L'organe 7 de commande est disposé concentriquement autour du raccord 50 de sortie. L'organe 7 de commande a par exemple la forme générale d'un volant circulaire dont la partie centrale creuse abrite le raccord 50 de sortie. L'organe 7 de commande est monté rotatif sur le corps 2 autour du raccord 50 de sortie fixe.

L'organe 6 de régulation du débit est monté libre en rotation autour de raccord 50 de sortie. L'organe 6 de régulation du débit est solidaire en rotation avec l'organe 7 de commande.

Le raccord 50 comprend un passage 15 dont une première extrémité communique avec le circuit de soutirage dans le raccord 50 (vers extrémité terminale du raccord 50). Selon la position angulaire de l'organe 7 de commande relativement au corps 2, une seconde extrémité de ce passage 15 est susceptible de communiquer de façon étanche avec un trou calibré 16 déterminé sur une première face de l'organe 6 de régulation. La seconde face de l'organe 6 de régulation communique de façon étanche avec une conduite 118 d'amenée du gaz.

De cette façon, lorsque l'opérateur fait tourner l'organe 7 de commande, il sélectionne tour à tour soit une portion sans trou calibré soit l'un des trous calibrés 16 selon la répartition des trous calibrés sur l'organe 6 de régulation. Par exemple, après une portion sans trou calibré, les positions suivantes (rotation continuée dans le même sens) sélectionnent successivement des trous 16 calibrés différents.

En sélectionnant un trou 16 calibré déterminé, le dispositif assure un écoulement de gaz entre la conduite 118 et le passage 15 du raccord 50 de sortie avec un débit déterminé. Dans une position déterminée de l'organe 7 de commande où une portion sans trou calibré est sélectionnée, ceci empêche le soutirage.

Dans cette configuration, le raccord 50 de sortie est fixe tandis que l'organe 6 de régulation muni des trous 16 calibrés est mobile avec l'organe 7 de commande. Le dispositif peut comporter classiquement un mécanisme de crantage (non représenté par soucis de simplification) permettant de former des positions stables références du levier par rapport au raccord 50 de sortie. Ces positions stables correspondent à une fermeture du trajet de gaz (pas d'orifice calibré 16 en vis-à-vis du passage 15) ou un orifice 16 déterminé sélectionné pour permettre le soutirage.

## Revendications

1. Régulateur de débit gazeux muni d'un corps (5) abritant un conduit de gaz comprenant une extrémité (124) amont destinée à être raccordée à une source de gaz et une extrémité aval (24) munie d'un raccord (50) de sortie et destinée à être raccordée à un utilisateur du gaz avec un débit régulé, le conduit de gaz comprenant un organe (6) de régulation sélective du débit du fluide circulant entre les extrémités amont (124) et aval (24), le régulateur de débit comprenant un organe (7) de commande manuel monté mobile relativement au corps (5) et coopérant avec l'organe (6) de régulation du débit du fluide pour contrôler le débit de fluide admis à passer de l'extrémité (124) amont vers l'extrémité aval (24) selon la position de l'organe (7) de commande par rapport au corps (5), **caractérisé en ce que** l'organe (7) de commande comporte une paroi périphérique de préhension délimitant un volume creux central ouvert vers l'extérieur du régulateur et **en ce que** le raccord (50) de sortie est situé et débouche dans ledit volume creux central, le volume creux étant délimité par une paroi (70) de l'organe (7) de commande formant une enceinte de protection autour du raccord (50) de sortie et espacée de ce dernier.

2. Régulateur de débit selon la revendication 1, **caractérisé en ce que** l'organe (7) de commande comprend une portion de forme générale tubulaire, tronconique ou en couronne et **en ce que** le raccord (50) de sortie est situé dans la partie centrale de ladite forme tubulaire, tronconique ou en couronne.

3. Régulateur de débit selon la revendication 1 ou 2, **caractérisé en ce que** l'organe (7) de commande et le raccord (50) de sortie sont disposés concentriquement.

4. Régulateur de débit selon l'une quelconque des revendications 1 à 3, **caractérisé en ce que** le raccord (50) de sortie a une forme oblongue s'étendant selon un axe longitudinal (19) et **en ce que**, selon une direction parallèle à l'axe (19) longitudinal du raccord (50) de sortie, l'extrémité terminale du raccord (50) de sortie est située au niveau ou en retrait de l'extrémité terminale de l'organe (7) de commande.

5. Régulateur de débit selon l'une quelconque des revendications 1 à 4, **caractérisé en ce que** l'organe (7) de commande est mobile en rotation sur le corps (5) autour d'un axe de rotation.

6. Régulateur de débit selon l'une quelconque des revendications 1 à 5, **caractérisé en ce que** l'organe (7) de commande est mobile en rotation sur le corps (5) autour d'un axe (19) de rotation et de symétrie passant par son volume creux central et **en ce que** le raccord (50) de sortie est fixe relativement au corps (5) et est situé sur ledit axe (19) de rotation de l'organe (7) de commande.

7. Régulateur de débit selon l'une quelconque des revendications 1 à 6, **caractérisé en ce que** l'organe (6) de régulation du débit comprend une plaque munie de trous calibrés (16) de diamètres respectifs distincts correspondants à des débits de gaz distincts déterminés, l'organe (7) de commande sélectionnant un des trous calibrés (16) déterminé sur le trajet du gaz dans le conduit de gaz selon la position de l'organe (7) de commande par rapport au corps (5).

8. Régulateur de débit selon la revendication 7, **caractérisé en ce que** l'organe (6) de régulation du débit est monté mobile relativement au corps (5) et solidaire du déplacement de l'organe (7) de commande, le corps (5) comprenant un passage (15) dont une première extrémité communique avec l'extrémité aval (24) du conduit de gaz et dont l'autre extrémité communique avec les trous calibrés (16) sur une première face de l'organe (6) de régulation, les trous calibrés (16) étant interposés tour à tour entre les extrémités amont (124) et aval (24) du conduit de gaz selon les positions de l'organe (7) de commande relativement au corps (5) de régulation.

9. Régulateur de débit selon la revendication 8, **caractérisé en ce que** l'organe (7) de commande est monté mobile en rotation relativement au corps (5) et **en ce que** l'organe (6) de régulation du débit est solidaire en rotation de l'organe (7) de commande, des positions angulaires déterminées de l'organe (7) de commande et de l'organe (6) de régulation relativement au corps (5) disposant respectivement les trous calibrés (16) entre les extrémités amont (124) et aval (24) du conduit de gaz.

10. Régulateur de débit selon la revendication 7, **caractérisé en ce que** l'organe (6) de régulation du débit est fixe relativement au corps (5) et **en ce que** l'organe (7) de commande est mobile relativement à l'organe (6) de régulation de débit et comprend un passage (15) dont une première extrémité communique avec l'extrémité aval (24) du conduit de gaz et dont l'autre extrémité est susceptible de communiquer de façon étanche et successivement avec chacun des trous calibrés (16) sur une première face de l'organe (6) de régulation selon les positions de l'organe (7) de commande relativement à l'organe (6) de régulation.

11. Détendeur de pression destiné à être raccordé à une source de gaz sous pression, le détendeur comprenant un corps (12) abritant un circuit (40) de gaz ayant une extrémité (140) amont munie d'un raccord (151) d'entrée destiné à être relié sélectivement à une source de pression tel qu'un raccord de sortie d'un robinet de gaz, et une extrémité aval (24) munie d'un raccord (50) de sortie destinée à être raccordée à un utilisateur du gaz détendu, le circuit (40) de gaz comprenant un détendeur (17) de pression conformé pour détendre le gaz circulant dans le circuit (40) de gaz à une pression déterminée fixe ou réglable, **caractérisé en ce que** le détendeur (17) comprend régulateur de débit selon l'une quelconque des revendications 1 à 10, dans lequel le raccord (50) de sortie du régulateur de débit constitue un raccord de sortie du détendeur.

12. Robinet (1) pour bouteille de fluide sous pression, notamment de gaz sous pression, comportant un corps (2) de robinet comprenant une extrémité (3) de montage destinée à être raccordée à un orifice d'une bouteille (9) de gaz, un circuit (4) interne de soutirage du fluide comprenant une première extrémité (14) débouchant au niveau de l'extrémité (3) de montage et une seconde extrémité (24) débouchant au niveau d'un raccord (50) de sortie situé sur le corps (2) de robinet, **caractérisé en ce que** le robinet comprend un régulateur de débit selon l'une quelconque des revendications 1 à 10, dans lequel le raccord (50) de sortie du régulateur de débit constitue un raccord de sortie du robinet.

13. Robinet selon la revendication 12, **caractérisé en ce que** l'organe (6) de régulation du débit comprend une plaque munie de trous calibrés (16) de diamètres respectifs distincts correspondants à des débits de gaz distincts déterminés, l'organe (7) de commande sélectionnant un trou calibré (16) déterminé sur le trajet du gaz dans le circuit de soutirage de gaz selon la position de l'organe (7) de commande par rapport au corps (2) du robinet.

14. Robinet selon la revendication 13, **caractérisé en ce que** l'organe (7) de commande et l'organe (6) de régulation du débit sont mobiles solidairement relativement au corps (2) du robinet, le corps (5) du régulateur de débit comprend un passage (15) dont une première extrémité communique avec le circuit de soutirage dans le raccord (50) de sortie et dont l'autre extrémité communique avec les trous calibrés (16) sur une première face de l'organe (6) de régulation, les trous calibrés (16) étant interposés tour à tour sur le circuit de soutirage selon respectivement les positions de l'organe (7) de commande relativement au corps (2) du robinet.

15. Bouteille (9) de fluide sous pression comprenant un robinet (2) conforme à l'une quelconque des revendications 12 à 14.

## Patentansprüche

1. Gasdurchflussregler, der mit einem Gehäuse (5) versehen ist, in dem eine Gasleitung beherbergt ist, die ein stromaufwärts gelegenes Ende (124) umfasst, das dazu bestimmt ist, an eine Gasquelle angeschlossen zu werden, und ein stromabwärts gelegenes Ende (24), das mit einem Ausgangsanschluss (50) versehen ist, und dazu bestimmt ist, an einen Gasanwender mit einem geregelten Durchfluss angeschlossen zu werden, wobei die Gasleitung ein Organ (6) zur selektiven Regelung des Fluiddurchflusses umfasst, das zwischen dem stromaufwärts (124) und stromabwärts (24) gelegenen Ende zirkuliert, wobei der Durchflussregler ein Organ (7) zum manuellen Steuern umfasst, das im Verhältnis zum Gehäuse (5) mobil montiert ist und mit dem Organ (6) zur Regelung des Fluiddurchflusses zusammenwirkt, um den Fluiddurchfluss zu kontrollieren, der je nach Position des Organs (7) zum Steuern im Verhältnis zum Gehäuse (5) vom stromaufwärts (124) zum stromabwärts (24) gelegenen Ende strömen darf, **dadurch gekennzeichnet, dass** das Organ (7) zum Steuern eine umlaufende Griffwand umfasst, die ein zentrales Hohlvolumen eingrenzt, das zur Außenseite des Reglers hin offen ist, und dadurch, dass sich der Ausgangsanschluss (50) im zentralen Hohlvolumen befindet und dahin einmündet, wobei das zentrale Hohlvolumen durch eine Wand (70) des Organs (7) zum Steuern eingegrenzt wird, die eine Schutzhülle um den Ausgangsanschluss (50) bildet und im Abstand zu letzterem angeordnet ist.

2. Durchflussregler nach Anspruch 1, **dadurch gekennzeichnet, dass** das Organ (7) zum Steuern einen im Allgemeinen röhrenförmigen, kegelstumpfförmigen oder kranzförmigen Abschnitt umfasst und dadurch, dass sich der Ausgangsanschluss (50) im zentralen Teil der röhrenförmigen, kegelstumpfförmigen oder kranzförmigen Form befindet.

3. Durchflussregler nach Anspruch 1 oder 2, **dadurch gekennzeichnet, dass** das Organ (7) zum Steuern und der Ausgangsanschluss (50) konzentrisch angeordnet sind.

4. Durchflussregler nach einem der Ansprüche 1 bis 3, **dadurch gekennzeichnet, dass** der Ausgangsanschluss (50) eine längliche Form aufweist, die sich entlang einer Längsachse (19) erstreckt und dadurch, dass sich der Abschluss des Ausgangsanschlusses (50) entlang einer Richtung parallel zur Längsachse (19) des Ausgangsanschlusses (50) im Bereich des Abschlusses des Organs (7) zum Steuern oder davon etwas zurückgezogen befindet.

5. Durchflussregler nach einem der Ansprüche 1 bis 4, **dadurch gekennzeichnet, dass** das Organ (7) zum Steuern auf dem Gehäuse (5) um eine Drehachse gedreht werden kann.

6. Durchflussregler nach einem der Ansprüche 1 bis 5, **dadurch gekennzeichnet, dass** das Organ (7) zum Steuern auf dem Gehäuse (5) um eine Dreh- und Symmetrieachse (19) gedreht werden kann, die durch sein zentrales Hohlvolumen verläuft und dadurch, dass der Ausgangsanschluss (50) im Verhältnis zum Gehäuse (5) feststehend ist und sich auf der Drehachse (19) des Organs (7) zum Steuern befindet.

7. Durchflussregler nach einem der Ansprüche 1 bis 6, **dadurch gekennzeichnet, dass** das Organ (6) zur Regelung des Durchflusses eine Platte umfasst, die mit kalibrierten Löchern (16) von jeweils unterschiedlichen Durchmessern versehen ist, die bestimmten unterschiedlichen Gasdurchflüssen entsprechen, wobei das Organ (7) zum Steuern eines der kalibrierten Löcher (16) auswählt, das auf der Strecke des Gases in der Gasleitung je nach Position des Organs (7) zum Steuern im Verhältnis zum Gehäuse (5) bestimmt wird.

8. Durchflussregler nach Anspruch 7, **dadurch gekennzeichnet, dass** das Organ (6) zur Regelung des Durchflusses im Verhältnis zum Gehäuse (5) mobil montiert ist, und mit dem Organ (7) zum Steuern bewegungsverbunden ist, wobei das Gehäuse (5) einen Durchlass (15) umfasst, dessen erstes Ende mit dem stromabwärts gelegenen Ende (24) der Gasleitung verbunden ist, und dessen anderes Ende mit den kalibrierten Löchern (16) auf einer ersten Seite des Organs (6) zur Regelung verbunden ist, wobei die kalibrierten Löcher (16) je nach den Positionen des Organs (7) zum Steuern im Verhältnis zum Regelungsgehäuse (5) der Reihe nach zwischen dem stromaufwärts (124) und stromabwärts (24) gelegenen Ende der Gasleitung eingesetzt werden.

9. Durchflussregler nach Anspruch 8, **dadurch gekennzeichnet, dass** das Organ (7) zum Steuern im Verhältnis zum Gehäuse (5) drehend montiert ist und dadurch, dass das Organ (6) zur Regelung des Durchflusses drehfest mit dem Organ (7) zum Steuern verbunden ist, wobei bestimmte Winkelpositionen des Organs (7) zum Steuern und des Organs (6) zur Regelung im Verhältnis zum Gehäuse (5) jeweils die kalibrierten Löcher (16) zwischen dem stromaufwärts (124) und stromabwärts (24) gelegenen Ende der Gasleitung anordnen.

10. Durchflussregler nach Anspruch 7, **dadurch gekennzeichnet, dass** das Organ (6) zur Regelung des Durchflusses im Verhältnis zum Gehäuse (5) feststehend ist, und dadurch, dass das Organ (7) zum Steuern im Verhältnis zum Organ (6) zur Regelung des Durchflusses mobil ist und einen Durchlass (15) umfasst, von dem ein erstes Ende mit dem stromabwärts gelegenen Ende (24) der Gasleitung verbunden ist, und dessen anderes Ende in dichter Form und nach und nach mit jedem der kalibrierten Löcher (16) auf einer ersten Seite des Organs (6) zur Regelung, je nach den Positionen des Organs (7) zum Steuern im Verhältnis zum Organ (6) zur Regelung, verbunden werden kann.

11. Druckminderer, der dazu bestimmt ist, an eine unter Druck stehenden Gasquelle angeschlossen zu werden, wobei der Druckminderer ein Gehäuse (12) umfasst, in dem ein Gaskreislauf (40) beherbergt ist, der ein stromaufwärts gelegenes Ende (140) aufweist, das mit einem Eingangsanschluss (151) versehen ist, der dazu bestimmt ist, selektiv mit einer Druckquelle, wie mit einem Ausgangsanschluss eines Gasventils verknüpft zu werden, und ein stromabwärts gelegenen Ende (24), das mit einem Ausgangsanschluss (50) versehen ist, und dazu bestimmt ist, an einen Anwender des druckgeminderten Gases angeschlossen zu werden, wobei der Gaskreislauf (40) einen Druckminderer (17) umfasst, der ausgeführt ist, um das Gas, das durch den Gaskreislauf (40) strömt, auf einen bestimmten feststehenden oder einstellbaren Druck zu entspannen, **dadurch gekennzeichnet, dass** der Druckminderer (17) einen Durchflussregler nach einem der Ansprüche 1 bis 10 umfasst, wobei der Ausgangsanschluss (50) des Durchflussreglers einen Ausgangsanschluss des Druckminderers bildet.

12. Ventil (1) für eine unter Druck stehende Fluidflasche, insbesondere für unter Druck stehendes Gas, ein Ventilgehäuse (2) umfassend, das ein Montageende (3) umfasst, das dazu bestimmt ist, an eine Öffnung einer Gasflasche (9) angeschlossen zu werden, einen internen Kreislauf (4) zur Entnahme des Fluides, ein erstes Ende (14) umfassend, das in den Bereich des Montageendes (3) mündet, sowie ein zweites Ende (24), das in den Bereich eines Ausgangsanschlusses (50) mündet, der sich auf dem Ventilgehäuse (2) befindet, **dadurch gekennzeichnet, dass** das Ventil einen Durchflussregler nach einem der Ansprüche 1 bis 10 umfasst, wobei der Ausgangsanschluss (50) des Durchflussreglers einen Ausgangsanschluss des Ventils bildet.

13. Ventil nach Anspruch 12, **dadurch gekennzeichnet, dass** das Organ (6) zur Regelung des Durchflusses eine Platte umfasst, die mit kalibrierten Löchern (16) von jeweils unterschiedlichen Durchmessern versehen ist, die bestimmten unterschiedlichen Gasdurchflüssen entsprechen, wobei das Organ (7) zum Steuern ein kalibriertes Loch (16) auswählt, das auf der Strecke des Gases in der Gasleitung je nach Position des Organs (7) zum Steuern im Verhältnis zum Ventilgehäuse (2) bestimmt wird.

14. Ventil nach Anspruch 13, **dadurch gekennzeichnet, dass** das Organ (7) zum Steuern und das Organ (6) zur Regelung des Durchflusses im Verhältnis zum Ventilgehäuse (2) bewegungsverbunden sind, das Gehäuse (5) des Durchflussreglers einen Durchlass (15) umfasst, von dem ein erstes Ende mit dem Entnahmekreislauf im Ausgangsanschluss (50) verbunden ist, und dessen anderes Ende mit den kalibrierten Löchern (16) auf einer ersten Seite des Organs (6) zur Regelung verbunden ist, wobei die kalibrierten Löcher (16) der Reihe nach jeweils je nach den Positionen des Organs (7) zum Steuern im Verhältnis zum Ventilgehäuse (2) im Entnahmekreislauf eingesetzt sind.

15. Flasche (9) mit einem unter Druck stehenden Fluid, ein Ventil (2) gemäß einem der Ansprüche 12 bis 14 umfassend.

## Claims

1. Gas flow controller provided with a body (5) housing a gas line comprising an upstream end (124) intended to be connected to a gas source and a downstream end (24) provided with an outlet connection (50) and intended to be connected to a gas user with a controlled flow, the gas line comprising a regulating member (6) for selectively controlling the flow of the fluid circulating between the upstream (124) and downstream (24) ends, the flow controller comprising a manual control member (7) mounted such that it can move in relation to the body (5) and engaging with the fluid flow regulating member (6) to control the fluid flow allowed to pass from the upstream end (124) to the downstream end (24) depending on the position of the control member (7) in relation to the body (5), **characterised in that** the control member (7) comprises a peripheral grasping wall defining a hollow central volume open to the outside of the controller and **in that** the outlet connection (50) is situated in and opens out into said hollow central volume, the hollow volume being defined by a wall (70) of the control member (7) forming a protective enclosure around the outlet connection (50) and spaced apart from the latter.

2. Flow controller according to claim 1, **characterised in that** the control member (7) comprises a portion having an overall tubular, frustoconical or ring shape, and **in that** the outlet connection (50) is situated in the central part of said tubular, frustoconical or ring shape.

3. Flow controller according to claim 1 or 2, **characterised in that** the control member (7) and the outlet connection (50) are positioned concentrically.

4. Flow controller according to any one of claims 1 to 3, **characterised in that** the outlet connection (50) has an oblong shape extending along a longitudinal axis (19) and **in that**, along a direction parallel to the longitudinal axis (19) of the outlet connection (50), the terminal end of the outlet connection (50) is situated at the level of or set back from the terminal end of the control member (7).

5. Flow controller according to any one of claims 1 to 4, **characterised in that** the control member (7) is capable of moving in rotation on the body (5) about an axis of rotation.

6. Flow controller according to any one of claims 1 to 5, **characterised in that** the control member (7) is capable of moving in rotation on the body (5) about an axis (19) of rotation and symmetry, passing through its hollow central volume and **in that** the outlet connection (50) is fixed in relation to the body (5) and is situated on said axis (19) of rotation of the control member (7).

7. Flow controller according to any one of claims 1 to 6, **characterised in that** the flow regulating member (6) comprises a plate provided with calibrated holes (16) with different respective diameters corresponding to different determined gas flows, the control member (7) selecting one determined hole of the calibrated holes (16) on the gas flow path in the gas line depending on the position of the control member (7) in relation to the body (5).

8. Flow controller according to claim 7, **characterised in that** the flow regulating member (6) is mounted such that it can move in relation to the body (5) and such that it is joined with the movement of the control member (7), the body (5) comprising a passage (15), a first end of which communicates with the downstream end (24) of the gas line and the other end of which communicates with the calibrated holes (16) on a first surface of the regulating member (6), the calibrated holes (16) being interposed one by one between the upstream (124) and downstream (24) ends of the gas line depending on the positions of the control member (7) in relation to the regulating body (5).

9. Flow controller according to claim 8, **characterised in that** the control member (7) is mounted such that it can move in rotation in relation to the body (5) and **in that** the flow regulating member (6) is joined in rotation to the control member (7), determined angular positions of the control member (7) and of the regulating member (6) in relation to the body (5) respectively arranging the calibrated holes (16) between the upstream (124) and downstream (24) ends of the gas line.

10. Flow controller according to claim 7, **characterised in that** the flow regulating member (6) is fixed in relation to the body (5) and **in that** the control member (7) is mobile in relation to the flow regulating member (6) and comprises a passage (15), a first end of which communicates with the downstream end (24) of the gas line and the other end of which is capable of communicating, in a sealed and successive manner, with each of the calibrated holes (16) on a first surface of the regulating member (6) depending on the positions of the control member (7) in relation to the regulating member (6).

11. Pressure expander intended to be connected to a pressurised gas source, the expander comprising a body (12) housing a gas circuit (40) having an upstream end (140) provided with an inlet connection (151) intended to be selectively connected to a pressure source, such as an outlet connection of a gas tap, and a downstream end (24) provided with an outlet connection (50) intended to be connected to an expanded gas user, the gas circuit (40) comprising a pressure expander (17) adapted to expand the gas circulating in the gas circuit (40) to a fixed or adjustable determined pressure, **characterised in that** the expander (17) comprises a flow controller according to any one of claims 1 to 10, wherein the outlet connection (50) of the flow controller constitutes an outlet connection of the expander.

12. Tap (1) for a compressed fluid bottle, in particular containing pressurised gas, including a tap body (2) comprising an assembly end (3) intended to be connected to an orifice of a gas bottle (9), an inner circuit (4) for tapping the fluid comprising a first end (14) opening out at the level of the assembly end (3) and a second end (24) opening out at the level of an outlet connection (50) situated on the tap body (2), **characterised in that** the tap comprises a flow controller according to any one of claims 1 to 10, wherein the outlet connection (50) of the flow controller constitutes an outlet connection of the tap.

13. Tap according to claim 12, **characterised in that** the flow regulating member (6) comprises a plate provided with calibrated holes (16) with different respective diameters corresponding to different determined gas flows, the control member (7) selecting a determined calibrated hole (16) on the gas flow path in the gas tapping circuit depending on the position of the control member (7) in relation to the body (2) of the tap.

14. Tap according to claim 13, **characterised in that** the control member (7) and the flow regulating member (6) can move together with each other in relation to the body (2) of the tap, the body (5) of the flow controller comprises a passage (15), a first end of which communicates with the tapping circuit in the outlet connection (50), and the other end of which communicates with the calibrated holes (16) on a first surface of the regulating member (6), the calibrated holes (16) being interposed one by one on the tapping circuit respectively depending on the positions of the control member (7) in relation to the body (2) of the tap.

15. Compressed fluid bottle (9) comprising a tap (2) according to any one of claims 12 to 14.
